Europäisches Patentamt

European Patent Office

Office européen des brevets

(19)

(11) Veröffentlichungsnummer: **0 038 971**
**B1**

(12) **EUROPÄISCHE PATENTSCHRIFT**

(45) Veröffentlichungstag der Patentschrift:
27.11.85

(51) Int. Cl.⁴: **A 01 N 55/04,** C 08 K 3/16,
C 08 K 3/30, C 08 K 5/57

(21) Anmeldenummer: 81102689.7

(22) Anmeldetag: 09.04.81

(54) Formkörper aus Kunststoff enthaltend bewuchsverhindernde Wirkstoffe auf Basis von Zinnverbindungen und ihre Verwendung als Dichtungsbahnen.

(30) Priorität: 15.04.80 DE 3014291

(43) Veröffentlichungstag der Anmeldung:
04.11.81 Patentblatt 81/44

(45) Bekanntmachung des Hinweises auf die Patenterteilung:
27.11.85 Patentblatt 85/48

(84) Benannte Vertragsstaaten:
AT BE CH DE FR GB IT LI LU NL SE

(56) Entgegenhaltungen:
DE - B - 1 224 488
GB - A - 787 930
US - A - 2 307 092
US - A - 2 307 157
US - A - 2 731 484
US - A - 2 746 946
US - A - 3 067 166
US - A - 3 644 589
US - A - 4 041 014
US - A - 4 193 913

British Plastics, Tomb 30(3), Seiten 183-186, 1959
A.K. SAWYER: "Organotin compounds", Band 3, 1972,
Marcel Dekker, Inc., Seiten 931-974, New York, USA
K. THINIUS: "Stabilisierung und Alterung von
Plastwerkstoffen", Band 1, 1969, Akademie-Verlag,
Seiten 157-159, Berlin, DE

(73) Patentinhaber: DYNAMIT NOBEL
AKTIENGESELLSCHAFT, Postfach 1209,
D-5210 Troisdorf, Bez. Köln (DE)

(72) Erfinder: Spielau, Paul, Dr., Van-Gogh-Platz 10,
D-5210 Troisdorf-Eschmar (DE)
Erfinder: Vohwinkel, Horst, Cranachstrasse 4,
D-5210 Troisdorf-Eschmar (DE)

## Beschreibung

Die Erfindung befasst sich mit Formkörpern aus Kunststoff, enthaltend Zinnverbindungen als bewuchsverhindernde Wirkstoffe sowie ihre Verwendung als Dichtungsbahnen.

Unter dem allgemeinen Begriff Bio-Stabilisatoren werden diejenigen Stoffe verstanden, deren Eigenschaft darin besteht, die Stabilität eines Materials gegen biologischen Angriff zu gewährleisten. Der biologische Angriff kann jedoch auf unterschiedliche Art und Weise erfolgen, z.B. durch Schimmel, Algen, Pilze, Bakterien, Nagetiere, Bewuchs- und Schleimbildung, Seewasserschädlinge etc.

Die an Bio-Stabilisatoren zu stellenden Anforderungen lassen sich folgendermassen umreissen:

- breites Spektrum antimikrobieller Aktivität,
- Wirksamkeit in niedriger Konzentration,
- kein negativer Einfluss auf das zu schützende Material (keine Verfärbung, Verschlechterung der Wärmestabilität oder der Lichtstabilität usw.),
- Verträglichkeit mit Weichmachern und anderen Zusätzen (Stabilisatoren, Gleitmitteln, Antioxidatien usw.),
- keine negativen Nebeneigenschaften (Korrosivität, Hautreizung, Geruch des Fertigprodukts),
- thermische Beständigkeit und geringe Flüchtigkeit bei Verarbeitungsbedingungen,
- Lagerstabilität,
- einfach zu applizieren,
- Dauerhaftigkeit in der Anwendung,
- geringe Warmblüter-Toxizität.

Als Bio-Stabilisatoren mit biocider Wirkung sind bekannt und von praktischer Bedeutung 10,10'-Oxy-bis-phenoxyarsin, N-(Trihalogenmethylthio)-phthalimid, Diphenylantimon-2-ethyl-hexanoat, Kupfer-8-hydroxychinolin. Ihre Einsatzkonzentration liegt unterschiedlich zwischen 0,3% bei Reinsubstanz und 5% bei Lösungen, siehe hierzu Gächter/Müller, Kunststoff-Additive, Carl Hanser-Verlag, München, 1979, S. 456, und Polymer Engineering and Science, July 1970, Vol. 10, No. 4, S. 241–246. Von diesen Bio-Stabilisatoren haben sich Kupfer-8-hydroxychinolin und N-(Trihalogenmethylthio)-phthalimid besonders bei der biociden Ausrüstung von Weich-PVC-Produkten bewährt.

Desgleichen sind in der DE-OS 2 929 756 als bewuchsverhindernde Wirkstoffe in Unterwasseranstrichmitteln spezielle Dihalogenphenyl-β-chloräthylsulfonderivate beschrieben.

Eine weitere Gruppe bekannter Bio-Stabilisatoren bilden die Triorganozinnverbindungen des Typs $R_3SnX$, deren ausserordentliche Wirksamkeit gegen die verschiedensten Mikroorganismen wie Pilze, Bakterien und Algen frühzeitig erkannt und genutzt wurde. Die gegen den biologischen Angriff stabilisierende Wirkung der Triorganozinnverbindungen wird überwiegend von der Kettenlänge der am Zinn gebundenen Kohlenwasserstoffreste R bestimmt. Bei den Trialkylzinnverbindungen liegt das Wirkungsoptimum dann vor, wenn die Gesamt-C-Zahl der Alkylgruppen 9 bis 12 beträgt, d.h. bei den Tripropyl- und Tributylzinnverbindungen. Von den Arylverbindungen haben die Triphenylverbindungen eine mit den Trialkylverbindungen vergleichbare Wirkung. Die genannten Triorganozinnverbindungen werden z.B. als Textilschutzmittel mit biocider Wirkung gegen Pilze und Bakterien eingesetzt oder als Holzschutzmittel z.B. zur Bekämpfung holzzerstörender Pilze oder Schiffsbohrwürmer. Als Antifouling-Anstriche zur Verhinderung des Unterwasserbewuchses von Gegenständen in Meer, Fluss, Seen werden neben $Cu_2O$, Quecksilberverbindungen ebenfalls Triorganozinnverbindungen, insbesondere Tributyl- und Triphenylzinnverbindungen eingesetzt, hierbei werden 10 bis 20% dieser Wirkstoffe, bezogen auf den getrockneten Antifouling-Anstrich, für erforderlich gehalten. Des weiteren werden insbesondere Tributylzinnverbindungen in biociden Anstrichen zur Verhinderung des Befalles oder Bewuchses z.B. in Feuchträumen durch Mikroorganismen angewandt. Eine weitere Anwendung der Triorganozinnverbindungen, und zwar bevorzugt des Tributylzinnoxids, ist die biocide Ausrüstung von Kunststoffen, insbesondere von weichmacherhaltigen Kunststoffen, wie Weich-PVC. Einerseits wirkt hier die Triorganozinnverbindung als pilzhemmend insbesondere zum Schutze der Weichmacher, andererseits bewuchshemmend gegenüber Mikroorganismen, die den Kunststoff schlechthin befallen. Da Tributylzinnoxid, das bevorzugt eingesetzt wird, jedoch nicht lichtbeständig ist, wird sogenanntes stabilisiertes Tributylzinnoxid eingesetzt. Darüberhinaus ist die Anwendung insbesondere der Tributylzinnverbindungen als Molluskizide, Desinfektionsmittel, Schleimbekämpfungsmittel in der Papierindustrie und als Insektizide bekannt.

Im Gegensatz zu der bekannten und vielfältig genutzten Wirksamkeit von Triorganozinnverbindungen gegen unterschiedlichste biologische Angriffe hat man bis heute sowohl die anorganischen Zinnverbindungen als auch die Organozinnverbindungen des Typs $R_2SnX_2$, Diorganozinnverbindungen, und $RSnX_3$, Monoorganozinnverbindungen, für praktisch unwirksam auf diesem Gebiet gehalten, wir verweisen hierzu auf das technische Merkblatt der Schering AG, Industriechemikalien «Technische Herstellung und Verwendung von Organozinnverbindungen» von Dr. A. Boghans und Dr. H. Plum vom März 1975.

Hingegen sind von den Organozinnverbindungen einige Diorganozinnverbindungen und einige Monoorganozinnverbindungen für ihre PVC-stabilisierende Wirkung, insbesondere Verhinderung der Abbaureaktionen durch Einwirkung von Wärme, Licht und Oxydation beim PVC bekannt und werden als Stabilisator eingesetzt. Zinnstabilisatoren weisen jedoch nicht durchgehend gute Eigenschaften bezüglich Lichtechtheit, Wasserfestigkeit, Dauerverhalten, Wärmebeständigkeit und Verarbeitbarkeit auf, so dass sie in der Regel nicht allein angewendet werden, sondern in Kombination mit weiteren Stabilisatoren. Beispielsweise zeigt das Dibutylzinndilaureat zwar eine gute Lichtstabilisierung, jedoch eine relativ schlechte Wärmestabilität und wird daher nur in Kombination mit anderen Zinnstabilisatoren eingesetzt. Das Dibutylzinnmaleat hingegen stabilisiert gut gegen Wärmeeinwirkung, ist aber als polymere Verbindung im PVC unlöslich und gibt Schwierigkeiten bei der Verarbeitung und neigt zum Plate-Out. Die besten Wärmestabilisatoren und für die Hochtemperaturverarbeitung von Hart-PVC zu Platten, Folien, Flaschen sind Diorganozinnverbindungen mit direkten Zinn-Schwefel-Bindungen, wie z.B. die Dialkylzinn-diisooctylthioglykolate. Diese Verbindungen haben jedoch den Nachteil, dass sie in der Freibewitterung sich langfristig nicht bewähren und zu einer Schädigung des Hart-PVC führen. Gleiches gilt auch für die Dioctylzinnverbindungen, die jedoch wegen ihrer Ungiftigkeit für die Stabilisierung von PVC z. B. für Lebensmittelverpackungen eingesetzt werden. Gleiches gilt für toxisch unbedenkliche Monoorganozinnverbindungen, wie die polymeren Monoalkylzinnoxide oder -sulfide, mit denen PVC gegen Hitze- und Lichteinwirkung stabilisiert wird auf dem Anwendungsgebiet der Lebensmittelverpackungen.

Die mit Organozinnverbindungen als Stabilisator für PVC erreichbaren Eigenschaften sind jedoch bezüglich der für viele Anwendungsgebiete geforderten Witterungsbeständigkeit, insbesondere Langzeitstabilität in der Farbe, geringe Wasseraufnahme, keine Zersetzungserscheinungen, z.B. für Fensterprofile, Fassadenprofile u. -platten, Dachfolien, Agrarfolien, Schwimmbadfolien, Planen für Traglufthallen, nicht ausreichend.

Neben der Stabilisierung von PVC gegen den Abbau durch Wärme-, Licht- und Oxydationseinwirkung ist daher für viele Anwendungsgebiete noch eine weitere oder andere Stabilisierung des PVC gegen Witterungseinflüsse erforderlich. Hierfür sind nach dem heutigen Stand der Entwicklung die Barium-Cadmium-Stabilisatoren allen anderen Stabilisatoren und -systeme überlegen. Für witterungsbeständige Anwendungen werden Organozinnverbindungen als Stabilisatoren allein nicht eingesetzt, da sie bereits nach kurzer Bewitterungszeit eine deutliche Schädigung zeigen, siehe beispielsweise Plastverarbeiter, 30. Jahrg., 1979, Nr. 12, Seite 747-751, «Barium/Cadmium für die Stabilisierung von PVC von Dr. P. Bredereck und Dr. H. Endriss».

Besonders schwierige Produkte sind alle diejenigen, die ständig im Gebrauch mit Wasser oder Feuchtigkeit in Berührung kommen, z.B. Schwimmbeckenfolien aus Weich-PVC oder anderen thermoplastischen/elastischen Kunststoffen, die einerseits eine hohe Witterungsbeständigkeit und Farb- und Lichtechtheit aufweisen sollen, andererseits gegen den biologischen Angriff von Mikroorganismen, Algen etc. resistent sein sollen. Es ist bekannt, dass Schwimmbeckenfolien dazu neigen, einen schleimigen Oberflächenbelag anzusetzen, weil die Oberflächenrauhigkeit der Schwimmbeckenfolie ein Haftgrund für Mikroorganismen ist. Dieser Effekt wird noch verstärkt durch das Eindringen der Mikroorganismen mit Hilfe des Wassers als Transportmittel in das relativ weiche Material. Zugleich werden an Schwimmbadauskleidungen hohe Anforderungen bezüglich der Wasser- und Witterungs- und Farbstabilität gestellt, so dass solche Folien überwiegend mit Barium-Cadmium-Verbindungen stabilisiert werden. Das Problem der Schleimbelagsbildung wird in der Regel indirekt gelöst, indem man nämlich dem Wasser sogenannte Wasserpflegemittel wie Chlor- oder Brompräparate mit starker Oxidationswirkung zusetzt. Als direkte Massnahme ist es auch bekannt, Tributylzinnoxid als sogenannten Bio-Stabilisator zur Bewuchsverhinderung in der Schwimmbeckenfolie einzusetzen. Die Tributylzinnoxid- wie auch weitere bekannte Trialkylzinnverbindungen sind jedoch stark toxisch, insbesondere weisen sie auch eine starke Inhalationstoxizität auf, was zu erheblichen Problemen z.B. während der Folienherstellung bei den hohen Verarbeitungstemperaturen führt.

Der Erfindung liegt die Aufgabe zugrunde, bewuchsverhindernde Wirkstoffe zu ermitteln, die allgemein bei möglichst geringer oder gar keiner Toxität einsetzbar sind und hiermit herstellbare Produkte auf Basis von Kunststoffen zu schaffen, die möglichst gleichzeitig auch licht-, wetter- und wärmebeständig stabilisiert sind und bewuchsabweisend ausgerüstet sind. Damit sollen auch Formkörper erzeugbar sein, die eine möglichst geringe Umweltbelastung durch geringe Toxität aufweisen. Diese Aufgabe wird erfindungsgemäss mit Diorgano- bzw. Monoorganozinnverbindungen des Typs $R_2SnX_2$ bzw. $RSnX_3$, wobei R für einen Kohlenwasserstoffrest und X für organische oder anorganische Substituenten stehen, oder anorganischen zweiwertigen Zinnsalzen als bewuchsverhinderndem Wirkstoff gelöst. Überraschend hat sich nämlich herausgestellt, dass die bisher als biocid unwirksam gegen die verschiedensten Mikroorganismen wie Pilze, Bakterien und Algen geltenden Zinn-Verbindungen gemäss Anspruch 1 eine gute Wirksamkeit in der Bewuchsverhinderung, d.h. gegen die Ansiedlung von Algen, Mikroorganismen o.dgl. auf der Oberfläche von Kunststofformkörpern entfalten.

Während also die stabilisierende Wirkung gegen den Abbau von PVC durch Licht-, Wärme- und Oxydationseinwirkung der Diorgano- bzw. Monoorganozinnverbindungen seit langem bekannt ist, ist ihre bewuchsverhindernde Wirkung und eine entsprechende Anwendung erst im Rahmen der vorliegenden Erfindung bekannt und nutzbar geworden.

Bevorzugt werden als bewuchsverhindernde Wirkstoffe Dialkylzinnverbindungen eingesetzt. Hierbei kommen zum einen Dialkylzinnverbindungen, wobei X für einen Esterrest gesättigter und/oder ungesättigter Carbonsäuren steht, wie Dibutylzinndilaureat, Dibutylzinnmaleat, Dioctylzinndilaureat bzw. -maleat in Frage. Eine andere Gruppe von Dialkylzinnverbindungen, die erfindungsgemäss eingesetzt werden können, sind diejenigen, bei denen die Reste X für anorganische Reste, wie Halogene, Schwefel, Sauerstoff oder Alkoxidgruppen stehen, beispielsweise Di-n-butylzinndichlorid, Di-n-octylzinndichlorid, Dibutylzinnoxid, Dimethyl- oder Dibutylzinnsulfid oder Dialkylzinnalkoxide. Auch Dialkylzinnalkoxide, bei denen eine oder beide Alkoxigruppen ersetzt sind durch Dicarbonsäurehalbester bzw. Thiocarbonsäureester, wie Dibutylzinnmethoximaleinsäuremethylester, Di-n-octylzinndiisooctylthioglykolat oder -maleat, Dimethylzinn-diisooctyl-thioglykolat. Di-n-butylzinndiisooctylthioglykolat, haben sich als im erfindungsgemässen Sinne wirksam erwiesen. Von besonderer Bedeutung ist auch, dass die überwiegende Zahl der erfindungsgemäss eingesetzten Diorganozinnverbindungen toxisch unbedenklich ist, im Gegensatz zu der überwiegenden Anzahl der bisher auch für diese Anwendungen eingesetzten Triorganozinnverbindungen. Neben den Diorganozinnverbindungen bevorzugt die Monoalkylzinnverbindungen bzw. deren polymere Form sowie Monoalkylverbindungen, bei denen die Reste X für anorganische Reste wie Halogene, Schwefel, Sauerstoff oder Alkoxidgruppen stehen, beispielsweise n-Butylzinntrichlorid, Monobutylzinnoxid, Monobutylzinnsulfid erfindungsgemäss verwendet.

Auch Monoalkylzinnalkoxidverbindungen, bei denen eine, zwei oder drei der Alkoxigruppen ersetzt sind durch Dicarbonsäurehalbester und/oder Thiocarbonsäureester und/oder Carbonsäuren, wie n-Octylzinntriisooctylthioglykolat, n-Octylzinn-bis-isooctylthioglykolat-laureat, lassen sich erfindungsgemäss einsetzen.

Eine andere Gruppe sind die anorganischen Zinnsalze, die ebenfalls sich überraschend als bewuchsverhindernder Wirkstoff einsetzen lassen, insbesondere Zinnchlorid bzw. Zinnsulfat. Jedoch kann eine gewisse Wasserlöslichkeit der Zinnsalze nachteilig sein, insoweit, als sie beispielsweise zu einer zunehmenden Rauhigkeit der Oberfläche einer Auskleidung führen kann.

Während üblicherweise als Bio-Stabilisatoren zwischen 0,3 bis 5 Gew.% bezogen auf die Formmasse an Wirkstoffen eingesetzt werden, sind bei den erfindungsgemäss eingesetzten Zinnverbindungen bereits Einsatzkonzentrationen von 0,005 bis 1,2, vorzugsweise 0,1 bis 0,5% Zinn berechnet aus den zugesetzten Zinnverbindungen bezogen auf 100 Gew.% Formmasse als bewuchsverhindernder Wirkstoff ausreichend, wobei sich dieses auch nach dem jeweiligen Anwendungsgebiet und den sich hier stellenden Anforderungen richtet.

Ein bevorzugtes Anwendungsgebiet der Erfindung sind witterungsbeständige Produkte hergestellt aus einer Formmasse auf Basis Weich-PVC enthaltend Stabilisatoren für die Licht-, Wetter- und Wärmebeständigkeit und ggf. übliche Zusätze wie beispielsweise Farbmittel, Füllstoffe und Gleitmittel o.dgl. sowie als bewuchsverhindernden Wirkstoff eine der erfindungsgemässen Zinnverbindungen. Der Ausdruck PVC umfasst auch Copolymere des Vinylchlorids mit einem Gewichtsanteil von 15 bis 50% andere polymerisierbarer Monomeren, z.B. Vinylacetate, Acrylsäureester oder Methacrylsäureester mit verschiedenen Alkoholkomponenten bzw. Mischungen hiervon.

Die erfindungsgemäss witterungsbeständig ausgerüsteten Produkte auf Basis Weich-PVC weisen die Vorteile einer guten Licht-, Wetter- und Wärmebeständigkeit durch geeignete Stabilisatoren, vorzugsweise auf Basis von Barium-Cadmium-Verbindungen oder Calzium-Zink-Verbindungen bzw. in Kombination mit weiteren Stabilisatoren auf und verhindern zugleich das Ansiedeln von Bewuchs, wie Algen, Mikroorganismen usw. Überraschend wird durch die erfindungsgemäss eingesetzten Zinnverbindungen weder die Lichtbeständigkeit noch die Wetterbeständigkeit bzw. die Wärmebeständigkeit bzw. die Verarbeitbarkeit der Formmasse bzw. Produkte beeinträchtigt. Im Gegenteil bewirken die erfindungsgemäss eingesetzten Organozinnverbindungen als Nebeneffekt noch eine – nicht erwartete – Verbesserung der Ba-Cd- bzw. Ca-Zn-Grundstabilisierung. Hinzu kommt, dass die gewählten Zinn-Verbindungen grösstenteils als toxisch unwirksam gelten, zum grossen Teil toxikologisch unbedenklich sind und sogar von den Gesundheitsbehörden zum Einsatz freigegeben sind.

Das bevorzugte Anwendungsgebiet der Erfindung sind Produkte auf Basis von Weich-PVC. Diese bedürfen gerade im Hinblick auf die Weichmacher einer besonderen Stabilisierung gegen biologischen Angriff. Hier ist es besonders überraschend, dass die bisher als gegen biologischen Angriff als unwirksam geltenden Zinn-Verbindungen gemäss Anspruch 1 und folgende eine bewuchsverhindernde Wirkung entfalten. Anwendungen von Produkten auf Basis Weich-PVC sind beispielsweise Dichtungsbahnen zum Auskleiden von Schwimmbecken, Feuchträumen, Kühlwasserbehältern, Agrarfolien usw. Als Weichmacher kommen hier insbesondere die Ester mehrbasischer Säuren mit einwertigen Alkoholen, wie Phthalate, Ester der Adipinsäure und Sebazinsäure, Trimellitsäureester, Paraffin-Sulfonsäure-Phenyl/Kresyl-Ester in Frage, wobei bevorzugt 15–50 Gew.% Weichmacher bezogen auf 100 Gew.% vorgesehen sind.

PVC kann nicht nur durch Zusatz von niedermolekularen Weichmachern weichgemacht werden, sondern auch durch Zusatz von hochpolymeren weichmachenden Additiven, wie Äthylenvinylacetat oder Äthylenvinylacetatcopolymeren, chloriertem Polyäthylen o. dgl. Die erfindungsgemässen Formmassen können 20–80 Gew.% hochpolymere weichmachende Additive bezogen auf 100 Gew.% Formmasse enthalten, wobei jedoch Weichmacher und hochpolymere Additive zusammen nicht mehr als 80 Gew.% der Formmasse ausmachen sollten.

Eine bevorzugte Anwendung der Erfindung ist die Verwendung von Diorgano- bzw. Monorganozinnverbindungen des Typs $R_2SnX_2$ bzw.

$RSnX_3$ oder anorganischen zweiwertigen Zinnsalzen als bewuchsverhindernden Wirkstoff in Dichtungsbahnen auf Basis von Weich-PVC enthaltend Stabilisatoren für die Licht-, Wetter- und Wärmebeständigkeit wie Barium-Cadmium-Verbindungen bzw. Calzium-Zinkverbindungen zum Auskleiden von wasserenthaltenden Behältern o. dgl.

Gegenstand der Erfindung sind daher Formkörper gemäss Anspruch 1 und deren Verwendung nach Anspruch 13.

Es hat sich gezeigt, dass durch den Einsatz der erfindungsgemässen Wirkstoffe sehr gute Ergebnisse erzielt werden. Die mit den erfindungsgemässen Wirkstoffen erzielte Schutzwirkung der Verhinderung des Bewuchses z.B. von Schwimmbeckenfolien und der Bildung von schleimigen Oberflächenbelägen war praktisch gleich gut wie die der bekannten Triorganozinnverbindungen, insbesondere der bevorzugt eingesetzten Trialkylverbindungen. Jedoch weisen die erfindungsgemäss eingesetzten Wirkstoffe den Vorteil auf, dass sie wesentlich weniger oder gar nicht toxisch sind, dies ist ein entscheidender Vorteil gegenüber den bisher eingesetzten bekannten Wirkstoffen (Bio-Stabilisatoren). Hinzu kommt, dass wegen der geforderten extremen Licht- und Witterungsbeständigkeit und geringen Wasseraufnahme Dichtungsbahnen, die ständig mit Wasser in Berührung kommen, überwiegend mit Barium-Cadmium-Verbindungen bzw. Calzium-Zinkverbindungen bzw. ggf. Kombinationen dieser mit weiteren Stabilisatoren stabilisiert werden. Überraschend ist auch, dass die erfindungsgemässen Wirkstoffe bei sehr hohem Weichmachergehalt von PVC-Formmassen bzw. der hieraus hergestellten Produkte eine besonders gute Wirksamkeit entfalten.

Ein weiterer Vorteil einer erfindungsgemäss ausgerüsteten Dichtungsbahn, die als Schwimmbeckenfolie eingesetzt wird, besteht darin, dass zur Sauberhaltung des Wassers weniger Pflegemittelzusätze erforderlich sind. Normalerweise ist eine bestimmte Menge Pflegemittel notwendig, um das Wasser sauber und klar zu halten; in Schwimmbecken mit geringer Wasserbewegung kommt es dann trotzdem zur Belagsbildung auf der Folie. Um dies zu vermeiden, werden die Pflegemittelmengen überdosiert, was zu starker Geruchsbelästigung führt, schädlich für die Haut und besonders für die Augen ist und auch aggressiv gegen die Folie selbst wirkt, die dadurch vorzeitig altern kann.

Die Erfindung wird nachfolgend an einigen Beispielen erläutert.

Beispiel 1 (Vergleichsbeispiel)

Aus 100 Gew.-Teilen S-PVC, 62 Gew.-Teilen eines $C_8–C_{10}$-Alkylphthalat-Weichmachers, 3,3 Gew.-Teilen epoxidiertes Sojaöl und 4 Gew.-Teilen eines handelsüblichen, flüssigen Ba/Cd-Stabilisators mit 6 Gew.% Cadmium wird eine PVC-Weichfolie durch Kalandrieren (Extrudieren) hergestellt. Gebräuchliche Antioxidantien, Lichtschutzmittel und Farbpigmente sind der Rezeptur in üblichen Mengen beigegeben, hier 7,8 Gew.-Teile insgesamt.

Die so hergestellte Folie wurde bei Raumtemperatur in Leitungswasser gelagert. Es wurde festgestellt, dass sich bereits nach 7 Tagen Lagerung auf der Folienoberfläche ein schleimiger Belag ausgebildet hatte. Dieser Belag besteht aus an der Folie anhaftenden Mikroorganismen und ist bei der praktischen Anwendung im Schwimmbecken Ausgangspunkt für eine fortschreitende Beeinträchtigung der Wasserqualität, da sich die Mikroorganismen entsprechend vermehren. Der Belag verstärkt sich bei der Weiterlagerung der Folie in Leitungswasser und bildet nach 60 Tagen eine Schichtdicke von ca. 0,5 mm. Der Belag selbst ist glitschig-schleimig und wirkt unangenehm.

Beispiel 2 (Vergleichsbeispiel)

Einer Rezeptur gem. Beispiel 1 wird zusätzlich 1,2 Gew.-Teile Tributylzinnoxid beigegeben und hieraus eine Folie durch Kalandrieren hergestellt, analog Beispiel 1. Bei Lagerung dieser Folie in Leitungswasser bei Raumtemperatur hat sich nach 14 Tagen noch kein Belag an der Folienoberfläche gebildet. Erst nach 60 Tagen Lagerung in Leitungswasser bei Raumtemperatur hat sich ein kaum merklicher glitschiger dünner Belag an der Folienoberfläche gebildet, der sich in weiteren 30 Tagen Lagerung leicht verstärkt. Nach weiterer Lagerung tritt auch hier eine dichter werdende Belagsbildung auf. Sehr nachteilig bei diesem bekannten biociden Wirkstoff ist seine hohe Toxizität, die seine Anwendungsmöglichkeiten stark einschränkt.

Beispiel 3

Einer Rezeptur gem. Beispiel 1 wurde zusätzlich 2,43 Gew.-Teile eines handelsüblichen Dibutyl-zinn-dithioglykolates zugegeben; das entspricht 0,4 Gew.-Teilen Zinn bzw. 0,23 Gew.% Zinn bezogen auf die Gesamtrezeptur. Hieraus wurde analog Beispiel 1 eine Folie hergestellt und unter gleichen Bedingungen getestet. Nach 14 Tagen Wasserlagerung war die Folie noch völlig belagsfrei, nach 60 Tagen hatte sich ein kaum merklicher Belag gebildet.

Beispiel 4

Einer Rezeptur gem. Beispiel 1 wurde zusätzlich 0,5 Gew.-Teile eines anorganischen Sn-Salzes, $SnCl_2$ zugegeben. Das entspricht 0,31 Gew.-Teilen Sn, d.h. 0,17 Gew.% Sn bezogen auf die Gesamt-Rezeptur. Hieraus wurde analog Beispiel 1 eine Folie hergestellt und unter gleichen Bedingungen getestet. Nach 14 Tagen Lagerung ist die Folie noch völlig belagsfrei. Nach 60 Tagen Lagerung zeigt die Folie einen schleimigen Belag, der noch geringer war als ihre Vergleichsfolie nach Beispiel 1 bereits nach 7 Tagen aufwies.

Beispiel 5

Einer Rezeptur gem. Beispiel 1 wurde 1 Gew.-Teil flüssiges Dibutylzinnmaleinsäureester, das entspricht 0,19 Gew.-Teilen Sn, also 0,11 Gew.%

Sn bezogen auf die Gesamtrezeptur, zugegeben und gemäss Beispiel 1 eine Folie hieraus hergestellt. Diese Folie wurde unter den gleichen Bedingungen wie in Beispiel 1 getestet und zeigt das gleiche Verhalten wie die Folie gem. Beispiel 3.

Beispiel 6 (Vergleichsbeispiel)

Aus einer Rezeptur von 100 Gew.-Teilen PVC, 96 Gew.-Teilen Äthylenvinylacetat-Copolymer, 6 Gew.-Teilen epoxidiertes Sojaöl, 6 Gew.-Teilen eines flüssigen Barium-Cadmium-Stabilisators (mit 6 Gew.% Cadmium) sowie 9,8 Gew.-Teilen üblichen Antioxidantien, Lichtschutzmitteln und Farbpigmenten, wird durch Extrudieren eine Folie hergestellt und unter den im Beispiel 1 angegebenen Bedingungen getestet. Diese Folie zeigt ein sehr ähnliches Verhalten in der Belagsbildung wie die Folie gem. Beispiel 1.

Beispiel 7

Einer Rezeptur gem. Beispiel 6 wurde 1 Gew.-Teil flüssiger Dibutylzinnmaleinsäureester, das entspricht 0,19 Gew.-Teilen Sn bzw. 0,06 Gew.% Sn bezogen auf die Gesamtrezeptur, beigegeben und hieraus eine Folie wie in Beispiel 5 hergestellt und getestet. Diese Folie zeigt bezüglich einer Belagsbildung, s.h. Ansiedlung von Mikroorganismen das gleiche Verhalten wie die Folie gem. Beispiel 4.

Beispiel 8

Einer Rezeptur gem. Beispiel 6 wurden 2 Gew.-Teile flüssiger Dibutylzinnmaleinsäureester zugegeben und eine Folie wie in Beispiel 6 beschrieben hergestellt und getestet. Diese Folie neigt auch nach 60 Tagen Lagerung im Wasser weniger zur Belagsbildung als die Folie nach Beispiel 7, d.h. sie ist praktisch noch belagsfrei und kaum glitschig. Das heisst, ein höherer Gehalt an erfindungsgemässem Wirkstoff zeigt auch eine bessere, eine länger anhaltende Wirksamkeit zur Verhinderung des Bewuchses, d.h. der Ausbildung schleimiger/glitschiger Beläge auf der Folie.

Beispiel 9

Bei einer Rezeptur gem. Beispiel 1 werden 3,5 Gew.-Teile n-Butyl-zinn-triisooctylthioglykolat, das entspricht 0,53 Gew.-Teilen Zinn, d.h. 0,29 Gew.% Zinn bezogen auf die Gesamtrezeptur, zugegeben. Unter gleichen Bedingungen wie im Beispiel 1 angegeben, wird eine Folie hergestellt und getestet. Diese verhält sich ähnlich in der Belagsbildung wie die Folie gem. Beispiel 7.

Beispiel 10 (Vergleichsbeispiel)

Aus einer Rezeptur aus:

100 Gew.-Teilen PVC
100 Gew.-Teilen eines Terpolymeren aus Ethylen-Vinylacetat-Kohlenmonoxid
  4 Gew.-Teilen epoxidiertes Sojaöl
  5 Gew.-Teilen eines flüssigen Ba-Cd-Stabilisators mit 6 Gew.% Cd und 11 Gew.% Ba.

12 Gew.-Teilen üblicher Gleitmittel, Antioxidantien, Lichtschutzmittel und Farbpigmente

wird eine Folie durch Extrudieren hergestellt und wie im Beispiel 1 in Leitungswasser gelagert. Die Folie zeigt eine mit Beispiel 1 vergleichbare Belagsbildung, d.h. nach 7 Tagen Wasserbelastung einen glitschigen Belag, der sich nach weiterer Wasserlagerung noch deutlich verstärkt.

Beispiel 11

Einer Rezeptur gemäss Beispiel 10 werden zusätzlich 2 Gew.-Teile flüssiger Dibutylzinnmaleinsäureester, das entspricht 0,38 Gew.-Teile Sn bzw. 0,17 Gew.% Sn bezogen auf die Gesamtrezeptur, zugegeben. Die hieraus hergestellte Folie zeigt ein wesentlich verbessertes Verhalten und auch nach 60 Tagen Lagerung im Wasser praktisch noch keinen Belag (vergleichbar Beispiel 8) auf der Oberfläche nach Lagerung im Wasser.

Beispiel 12 (Vergleichsbeispiel)

Aus einer Rezeptur aus:

100 Gew.-Teilen PVC
300 Gew.-Teilen PEC (chloriertes Polyethylen)
  12 Gew.-Teilen epoxidiertes Sojaöl
  14 Gew.-Teilen eines flüssigen Ba/Cd-Stabilisators mit 6 Gew.% Cd und 11 Gew.% Ba
    4 Gew.-Teilen Gleitmittel, Antioxidantien
  72 Gew.-Teilen Kreide
  32 Gew.-Teilen Farbpigmente, vorwiegend Titandioxid.

Es wird eine Folie durch Kalandrieren hergestellt. Die Folie wird wie in Beispiel 1 im Wasser gelagert. Die Belagsbildung ist in der Anfangsphase geringer, da das Material weniger anfällig ist. Jedoch hat sich mit einer zeitlichen Verschiebung ein dicker, glitschiger Belag nach 60 Tagen auf der Folie gebildet.

Beispiel 13

Aus einer Rezeptur gemäss Beispiel 12 plus zusätzlich 3 Gew.-Teile flüssiger Dibutylzinnmaleinsäureester, das entspricht 0,57 Gew.-Teilen Sn bzw. 0,11 Gew.% Sn, bezogen auf die Gesamtrezeptur wird ebenfalls eine Folie gemäss Beispiel 12 hergestellt und wie in Beispiel 1 gelagert. Bei der Wasserlagerung erkennt man, dass die bessere Ausgangsposition der nicht ausgerüsteten Grundmischung (Beispiel 12) sich auch hier auswirkt, d.h. nach 60 Tagen ist die Folie noch vollständig belagsfrei und nach 90 Tagen hat sich nur ein kaum merklicher Belag gebildet.

Die Beurteilung der Belagsbildung an der Oberfläche der Folien gemäss Beispiel 1 bis 13 ist in der Tabelle dargestellt.

In der beigefügten Tabelle ist die Belagsbildung der Folien gem. den Beispielen 1 bis 13 über einen Zeitraum bis zu 90 Tagen nochmals zusammengestellt. Für die Belagsbildung wurde die folgende Bewertung gewählt:

0 ohne Belag
1 kaum merklicher Belag
2 leichter Belag

3 glitschiger Belag
4 dicker glitschiger Belag

Beispiele (Bewertung Belag)

| Testdauer (Tage) | 1 | 2 | 3 | 4 | 5 | 6 | 7 | 8 | 9 | 10 | 11 | 12 | 13 |
|---|---|---|---|---|---|---|---|---|---|---|---|---|---|
| 7 | 3 | 0 | 0 | 0 | 0 | 0 | 0 | 0 | 0 | 3 | 0 | 0 | 0 |
| 14 | 4 | 0 | 0 | 0 | 0 | 0 | 0 | 0 | 0 | 3 | 0 | 1 | 0 |
| 28 | 4 | 0 | 0 | 1 | 0 | 4 | 1 | 0 | 1 | 4 | 0 | 2 | 0 |
| 60 | 4 | 1 | 1 | 2 | 1 | 4 | 2 | 1 | 2 | 4 | 1 | 4 | 0 |
| 90 | 4 | 2 | 2 | 2 | 2 | 4 | 2 | 2 | 2 | 4 | 1–2 | 4 | 1 |

**Patentansprüche**

1. Formkörper aus Kunststoff-Formmassen auf der Basis von Weich-PVC mit Gehalten von Stabilisatoren auf der Basis von Barium-Cadmium-Verbindungen oder Calzium-Zink-Verbindungen, enthaltend bewuchsverhindernde Wirkstoffe auf Basis von Zinnverbindungen, dadurch gekennzeichnet, dass er als bewuchsverhindernde Wirkstoffe Diorgano- bzw. Monoorganozinnverbindungen des Typs $R_2SnX_2$ bzw. $RSnX_3$, wobei R für einen Kohlenwasserstoffrest und X für organische bzw. anorganische Reste stehen, oder anorganische zweiwertige Zinnsalze mit einem Gehalt von 0,005 bis 1,2 vorzugsweise 0,1 bis 0,5 Gew.% Zinn berechnet aus den Zinnverbindungen, bezogen auf 100 Gew.% Formmasse.

2. Formkörper nach Anspruch 1, dadurch gekennzeichnet, dass bei der Diorganozinnverbindung R für Alkyl steht.

3. Formkörper nach Anspruch 2, dadurch gekennzeichnet, dass Dialkylzinnverbindungen, wobei X für einen Esterrest gesättigter und/oder ungesättigter Carbonsäuren steht, vorgesehen sind, wie Dibutylzinndilaureat, Dibutylzinnmaleat, Di-octylzinndilaureat, bzw. -maleat.

4. Formkörper nach Anspruch 2, gekennzeichnet durch eine Dialkylzinnverbindung bei der die Reste X für anorganische Reste, wie Halogen, Schwefel, Sauerstoff oder für Alkoxidgruppen stehen, beispielsweise Di-n-butylzinndichlorid, Di-n-octylzinndichlorid, Dibutylzinnoxid, Dimethyl- oder Di-butylzinnsulfid oder Dialkylzinnalkoxide.

5. Formkörper nach einem der Ansprüche 2 oder 4, gekennzeichnet durch Dialkylzinnalkoxide, bei denen eine oder beide Alkoxigruppen ersetzt sind durch Dicarbonsäurehalbester bzw. Thiocarbonsäureester, wie Dibutylzinnmethoximaleinsäuremethylester, Di-n-octylzinndiisooctylthioglykolat oder -maleat, Dimethylzinndiisooctylthioglykolat, Di-n-butylzinndiisooctylthioglykolat.

6. Formkörper nach Anspruch 1, dadurch gekennzeichnet, dass bei der Monoorganozinnverbindung R für Alkyl steht.

7. Formkörper nach Anspruch 6, gekennzeichnet durch Monoalkylzinnverbindungen, bei der die Reste X für anorganische Reste wie Halogen, Schwefel, Sauerstoff, oder für Alkoxidgruppen stehen, beispielsweise n-Butylzinntrichlorid, Mono-Butylzinnoxid, Monobutylzinnsulfid oder Monoalkylzinnalkoxide.

8. Formkörper nach einem der Ansprüche 6 oder 7, gekennzeichnet durch eine Monoalkylzinnalkoxidverbindung, bei der eine, zwei oder drei der Alkoxigruppen ersetzt sind durch Dicarbonsäurehalbester und/oder Carbonsäuren, wie n-Octylzinn-triisooctylthioglykolat, n-Octylzinn-bis-isooctylthioglykolat-laureat.

9. Formkörper nach Anspruch 1, dadurch gekennzeichnet, dass die Zinnverbindung ein Zinnchlorid bzw. Zinnsulfat ist.

10. Formkörper nach einem der Ansprüche 1 bis 9, gekennzeichnet durch einen Gehalt von 15 bis 50 Gew.% Weichmacher wie Ester mehrbasischer Säuren mit einwertigen Alkoholen, insbesondere Phthalate, Ester der Adipinsäure und Sebarinsäure, Trimallithsäureester, Paraffin-Sulfonsäure-Phenyl/Kresyl-Ester, bezogen auf 100 Gew.% Formmasse.

11. Formkörper nach einem der Ansprüche 1 bis 9, gekennzeichnet durch einen Gehalt an 20 bis 80 Gew.% hochpolymeren weichmachenden Additiven wie Ethylenvinylacetatcopolymeren, chlorierte Polyäthylene o. dgl. bezogen auf 100 Gew.% Formmasse.

12. Formkörper nach einem der Ansprüche 1 und 9, dadurch gekennzeichnet, dass Weichmacher und hochpolymere Additive zusammen nicht mehr als 80 Gew.% der Formmasse ausmachen.

13. Verwendung von Formkörpern gemäss einem der Ansprüche 1 bis 12 als Dichtungsbahnen zum Auskleiden von wasserenthaltenden Behältern bzw. von Feuchträumen, als witterungsbeständige Dichtungsbahn, als Schwimmbekkenfolie oder dergleichen.

**Claims**

1. Moulded body formed of plastics moulding compositions based on soft PVC with contents of stabilisers based on barium-cadmium combinations or calcium-zinc combinations, containing anti-fouling materials based on tin compounds, characterised in that it (contains) as anti-fouling materials diorgano or monoorgano tin compounds of the type $R_2SnX_2$ or $RSnX_3$, wherein R stands for a hydrocarbon residue and X for organic or inorganic residues, or inorganic bivalent tin salts with a content of 0.005 to 1.2, preferably 0.1 to 0.5, % by weight tin calculated as tin compounds, related to 100% by weight of moulding composition.

2. Shaped body according to claim 1, characterised in that, in the diorgano tin compound, R stands for alkyl.

3. Shaped body according to claim 2, characterised in that dialkyl tin compounds, wherein X stands for an ester residue of saturated and/or unsaturated carboxylic acids, are provided, such as dibutyltin dilaureate, dibutyl tin maleate, dioctyltin dilaureate or -maleate.

4. Shaped body according to claim 2, characterised by a dialkyltin compound, in which the residues X stand for inorganic residues such as halogen, sulphur, oxygen or for alkoxide groups, for example di-n-butyltin dichloride, di-n-octyltin dichloride, dibutyltin oxide, dimethyl or dibutyltin sulphite or dialkyltin alkoxide.

5. Shaped body according to one of claims 2 or 4, characterised by dialkyltin alkoxides in which one or both alkoxy groups are replaced by dicarboxylic acid semi-ester or thiocarboxylic acid esters such as dibutyltin methoxy maleic acid methyl ester, di-n-octyltin diisooctylthioglycolate or -maleate, dimethyltin diisooctylthioglycolate, di-n-butyltin diisooctylthioglycolate.

6. Shaped body according to claim 1, characterised in that R stands for alkyl in the monoorganot in compound.

7. Shaped body according to claim 6, characterised by monoalkyltin compounds, in which the residues X stand for inorganic residues such as halogen, sulphur, oxygen or for alkoxy groups, for example n-butyltin thrichloride, monobutyltin oxide, monobutyltin sulphide or monoalkyltin alkoxide.

8. Shaped body according to one of claims 6 or 7, characterised by a monoalkyltin alkoxide compound in which one, two or three of the alkoxy groups are replaced by dicarboxylic acid semi-esters and/or carboxylic acids, such as n-octyltin-triisooctylthioglycolate, n-octyltin-bis-isooctylthioglycolate-laureate.

9. Shaped body according to claim 1, characterised in that the tin compound is a tin chloride or tin sulphate.

10. Shaped body according to one of claims 1 to 9, characterised by a content of 15 to 50% by weight of plasticiser, such as esters of polybasic acids with monovalent alcohols, in particular phthalates, esters of adipic acid and sebacic acid, trimellitic acid esters, paraffin sulphonic acidphenyl/cresyl esters, related to 100% by weight of moulding composition.

11. Shaped body according to one of claims 1 to 9, characterised by a content of 20 to 80% by weight of high polymeric plasticising additives such as ethylene vinyl acetate copolymers, chlorinated polyethylene or the like, related to 100% by weight of moulding composition.

12. Shaped body according to one of claims 1 and 9, characterised in that plasticisers and high polymeric additives together do not make up more than 80% by weight of the moulding composition.

13. Use of shaped bodies according to one of claims 1 to 12, as sealing sheeting for lining of water-containing containers or of moist areas, as weathering resistant sealing sheets, as swimming pool sheeting or the like.

## Revendications

1. Corps formé à partir de masses de moulage de matière plastique à base de CPV plastifié contenant des stabilisants à base des composés de barium-cadmium ou de composés de calcium-zinc, contenant des agents antisalissures à base de composés de l'étain, caractérisés par le fait qu'il contient comme agents antisalissures des composés diorgano- et monoorganostanniques du type $R_2SnX_2$ et $RSnX_3$, où R est un reste hydrocarboné, et X représente des restes organiques ou minéraux, ou bien des sels d'étain bivalents minéraux avec une teneur comprise entre 0,005 et 1,2, de préférence entre 0,1 et 0,5, % en poids d'étain calculé à partir des composés de l'étain, par rapport aux 100% en poids de la masse de moulage.

2. Corps formé selon la revendication 1, caractérisé par le fait que, pour le composé diorganostannique, R est un alkyle.

3. Corps formé selon la revendication 1, caractérisé par le fait que sont prévus des composés de dialkylétain, où X représente un reste ester d'acides carboxyliques saturés et/ou insaturés, comme le dilauréate de dibutylétain, le maléate de dibutylétain, le dilauréate de di-octylétain et le maléate de di-octylétain.

4. Corps formé selon la revendication 2, caractérisé par un composé de dialkylétain dans lequel les restes X représentent des restes inorganiques comme halogène, le soufre, l'oxygène, ou des groupes alcoxydes, par exemple le dichlorure de di-n-butylétain, le dichlorure de di-n-octylétain, l'oxyde de dibutylétain, le sulfure de diméthyl- ou dibutylétain ou les alcoxydes de dialkylétain.

5. Corps formé selon une des revendications 2 ou 4, caractérisé par des alcoxydes de dialkylétain dans lesquels un ou deux des groupes alcoxydes sont remplacés par des hémiesters d'acides dicarboxyliques ou des esters d'acides thiocarboxyliques, comme l'ester méthylique d'acide dibutylétain-méthoxymaléique, le disooctylthioglycolate ou -maléate de di- n-octylétain, le diisooctylthioglycolate de diméthylétain, le diisooctylthioglycolate de di-n-butylétain.

6. Corps formé selon la revendication 1, caractérisé par le fait que, pour le composé monoorganostannique, R représente un reste alkyle.

7. Corps formé selon la revendication 6, caractérisé par des composés de monoalkylétain, dans lesquels les restes X représentent des restes inorganiques comme un halogène, le soufre, l'oxygène, ou des groupes alcoxydes, par exemple le trichlorure de n-butylétain, l'oxyde de monobutylétain, le sulfure de monobutylétain ou les alcoxydes de monoalkylétain.

8. Corps formé selon une des revendications 6 ou 7, caractérisé par un composé d'alcoxyde de monoalkylétain, dans lequel un, deux ou trois des groupes alcoxydes sont remplacés par des hémiesters d'acides dicarboxyliques et/ou acides carboxyliques, comme le triisooctylthioglycolate de n-octylétain, le bis-isooctylthioglycolate-laurate de n-octylétain.

9. Corps formé selon la revendication 1, caractérisé par le fait que le composé de l'étain est le chlorure d'étain ou le sulfate d'étain.

10. Corps formé selon une des revendications 1 à 9, caractérisé par une teneur de 15 à 50% en poids en plastifiants comme les esters d'acides polybasiques avec les monoalcools, en particulier les phtalates, les esters d'acide adipique et d'acide sébacique, les esters d'acide trimellitique, le phényl/crésyl ester d'acide paraffinesulfonique, par rapport à 100% en poids de la masse de moulage.

11. Corps formé selon une des revendications 1 à 9, caractérisé par une teneur de 20 à 80% en poids d'additifs plastifiants hauts polymères comme les copolymères d'acétate d'éthylènevinyle, le polyéthylène chloré, etc., par rapport à 100% en poids de la masse de moulage.

12. Corps formé selon une des revendications 1 à 9, caractérisé par le fait que le plastifiant et l'additif haut polymère ne représentent ensemble pas plus de 80% en poids de la masse de moulage.

13. Utilisation des corps formés conformément à une des revendications 1 à 12 comme bandes d'étanchement pour le revêtement des réservoirs contenant de l'eau et des endroits humides, comme bande d'étanchement résistant aux intempéries, comme feuille de piscines ou autres du même genre.